# EUROPÄISCHE PATENTSCHRIFT

(11) **EP 1 767 499 B1**
(45) Veröffentlichungstag und Bekanntmachung des Hinweises auf die Patenterteilung: **10.08.2011**
(21) Anmeldenummer: 06020238.9
(22) Anmeldetag: 27.09.2006
(51) Int. Cl.: C02F 3/12

(54) **Verfahren und Vorrichtung zur Brauchwasseraufbereitung**
Method and installation for service water treatment
Procédé et installation pour traitement d'eau de service

(30) Priorität: 27.09.2005 DE 102005046254; 31.01.2006 DE 102006004639
(43) Veröffentlichungstag der Anmeldung: 28.03.2007
(73) Patentinhaber: Firma aquadetox international GmbH, 88317 Altmannshofen (DE)
(72) Erfinder: Schaible, Jürgen, 88299 Leutkirch (DE); Lorch, Roland, 88348 Bad Saulgau (DE)
(74) Vertreter: Pfister, Stefan Helmut Ulrich

(56) Entgegenhaltungen:
- EP-A2- 0 394 777
- WO-A-96/15013
- DE-A1- 4 415 637
- DE-U- 20 116 578
- US-A1- 2003 047 521
- US-A1- 2004 261 844

## Beschreibung

Die Erfindung betrifft ein Verfahren sowie eine Vorrichtung zur Brauchwasseraufbereitung.

Es ist bekannt, zum Beispiel bei Schmutzwassererzeugern wie Autowaschstraßen, Autowaschplätzen und dergleichen, das anfallende Schmutzwasser in einer Klärstufe zu klären und als Brauchwasser wieder einzusetzen.

Um den Verbrauch an kostbarem Trinkwasser möglichst zu reduzieren wird ein möglichst geringer Frischwasserverbrauch der Autowaschanlagen angestrebt.

Die bekannten Verfahren und Vorrichtungen zur Brauchwasseraufbereitung besitzen eine Klärstufe, bei welcher schwebende und/ oder biologisch abbaubare Schmutzwasserbestandteile aus dem Schmutzwasser herausgeklärt werden.

Für Autowaschstraßen ist es bekannt, daß diese einen Frischwasserverbrauch von bis zu 25 1 pro Fahrzeug haben. Durch den andauernden Eintrag frischen Wassers (und Verlust der gleichen Menge Schmutzwassers) erfolgt keine Aufkonzentrierung von unerwünschten Störstoffen. Werden aber ressourcenschonende Anwendungen realisiert, so besteht die Gefahr einer Aufkonzentration von Stoffen mit unerwünschten Folgen.

Aus der Druckschrift DE 44 15 637 A1 ist ein Verfahren und eine Vorrichtung zur Klärung und Aufbereitung von Waschwasser aus Fahrzeugwaschanlagen bekannt. Dabei ist in einer Abwasserleitung mindestens ein belüfteter Bioreaktor vorhanden, dem ein ebenfalls belüfteter Schlammfang zugeordnet ist, wobei sich im Bioreaktor und im Schlammfang belebter Schlamm befindet.

Aus der Druckschrift EP 0 394 777 ist eine Wasseraufbereitungsanlage bekannt, welche das Wasser für eine fleckfreie Spülung aufbereitet und dafür entsalzt. Demnach dient die in dieser Druckschrift beschriebene Lösung mit einer Umkehrosmoseanlage für die Wasseraufbereitung des Waschwassers in Waschanlagen.

Aus der Druckschrift US 2004/0261844 A1 ist eine Abwasser-Sortieranlage bekannt, die mit Hilfe eines Leitfähigkeitsmessers die Verschmutzung beziehungsweise die Schadstoffkonzentration des aus der Bearbeitungsstation kommenden Brauchwassers misst. In Abhängigkeit von vorhandenen Verschmutzungen, die aufgrund des RCA Clean Prozesses in der Bearbeitungsstufe in Form von organischen Verunreinigungen, in Form von Silikondioxiden, metallischen Verunreinigungen bestehen können oder aber in Form von ionischen Verunreinigungen, in unterschiedliche Behälter geleitet werden.

Die Erfindung hat es sich zur Aufgabe gemacht, ein Verfahren sowie eine Vorrichtung zur Brauchwasseraufbereitung derart zu verbessern, daß möglichst jederzeit Brauchwasser in für die Anwendung ausreichender Qualität zur Verfügung gestellt wird.

Gelöst wird diese Aufgabe einerseits durch ein Verfahren und andererseits durch eine Vorrichtung nach den unabhängigen Ansprüchen 1, 11 und 17. Bei dem erfindungsgemäßen Verfahren zur Brauchwasseraufbereitung wird in Strömungsrichtung das Schmutzwasser zunächst in einer Klärstufe geklärt und hernach das geklärte Schmutzwasser, insbesondere optional in einer Inertreinigungsstufe gereinigt.

In der ebenfalls zur Erfindung zählenden Vorrichtung für die Brauchwasseraufbereitung wird vorgesehen, daß eine Klärstufe für die Klärung des anfallenden Schmutzwassers vorgesehen ist und der Klärstufe eine Inertreinigungsstufe nachgeordnet ist, welche insbesondere optional das geklärte Schmutzwasser reinigt.

Es ist gefunden worden, daß in der Klärstufe zwar biologisch abbaubare Schmutzbestandteile des Schmutzwassers wie auch andere Schwebstoffe aus dem Schmutzwasser entfernt werden können, jedoch insbesondere inerte Störstoffe in dem Schmutzwasser verbleiben und in den bekannten Klärstufen nicht aus dem Schmutzwasser entfernt werden. Wird nun eine Brauchwasseraufbereitung in einem Anwendungsfall mit nur einer sehr geringen oder ohne Frischwasserzufuhr eingesetzt, so erfolgt eine Aufkonzentration von schädlichen Störstoffen, zum Beispiel von Straßensalz, welches in der Winterzeit zur Sicherung des Straßenverkehrs gestreut wird. Eine hohe Salzkonzentration im Brauchwasser macht aber das Brauchwasser stumpf und für einen Waschprozeß ungeeignet. Obwohl das Schmutzwasser so weit geklärt ist, verbleiben doch Bestandteile im Wasser zurück, die insofern inert sind und das gewünschte Waschergebnis oder sonstige Eigenschaften im Anwendungsfall negativ beeinflussen.

Als inerte Störstoffe werden dabei Stoffe angesehen, die aufgrund der bereits bekannten Klärstufen nicht oder nur unzulänglich abgebaut werden und insofern reaktionsträge sind.

Die Erfindung zielt darauf ab, eine spezielle Reinigungsstufe für diese Störstoffe zur Verfügung zu stellen und optional, wenn nämlich das Schmutzwasser eine zu hohe oder sonstig ungünstige (zum Beispiel auch eine zu geringe) Konzentration aufweist, dieses in der entsprechend ausgebildeten Inertreinigungsstufe zu reinigen.

Eine Inertreinigungsstufe ist dabei bevorzugt auf physikalische Effekte aufgebaut, um so eine entsprechende Trennung der Störstoffe von dem bereits geklärten aber noch nicht als Brauchwasser verwendbaren Schmutzwasser zu erreichen. Oftmals wird die Inertreinigungsstufe daher zum Beispiel durch den Einsatz der Phasentrennung, zum Beispiel beim Phasenübergang von der flüssigen in die gasförmige Phase von Wasser realisiert werden. Dies schließt aber nicht aus, daß eine Inertreinigungsstufe zum Beispiel auf chemischen oder biologischen Prozessen aufbaut. Es ist zum Beispiel im Rahmen der Erfindung möglich, in einer biologisch funktionierenden Inertreinigungsstufe die störenden Störstoffe durch den gezielten Einsatz von Bakterien zerstören zu lassen. Die hierbei eingesetzten Bakterien sind dabei für die speziell anfallenden Störstoffe spezialisiert. Auch ist es möglich, die Störstoffe zum Beispiel durch eine chemische Umwandlung derart zu binden, daß diese aus dem Schmutzwasser entfernt werden.

Der Vorteil des Einsatzes einer physikalisch wirkenden Inertreinigungsstufe liegt insbesondere darin, daß diese verhältnismäßig wartungsarm ist, da für den Betrieb oftmals nur Energie, zum Beispiel in Form von Wärme zugeführt werden muß.

Dabei ist es ein weiterer Aspekt der Erfindung, daß physikalisch, chemisch und/oder biologisch wirkende Prozesse auch miteinander kombiniert zum Einsatz kommen.

Erfindungsgemäß erfolgt die Reinigung des Schmutzwassers in der Inertreinigungsstufe optional, gleichwohl bei Bedarf. Der Reinigungsprozeß des Schmutzwassers in der Inertreinigungsstufe ist verhältnismäßig energieaufwendig, weswegen dieser Prozeß nicht andauernd laufen muß, wenn eine entsprechende Brauchwasserqualität nicht benötigt wird. Die Erfindung sieht dabei vor, daß der Einsatz der Inertreinigungsstufe optional, insbesondere in Abhängigkeit von anderen Parametern erfolgt. Demnach wird die Inertreinigungsstufe bei Bedarf zugeschaltet. Eine solche Ausgestaltung führt so zu einer ausreichend guten Brauchwasserqualität bei geringem Aufwand.

In der erfindungsgemäßen Vorrichtung ist vorgesehen, daß die Klärstufe ein- oder mehrstufig ausgebildet ist. Es hat sich als günstig erwiesen, verschiedene Elemente für eine komplexere Klärstufe zusammenzustellen, weswegen es zum Beispiel vorgesehen ist, daß die Klärstufe einen Schlammfang, eine Belebungseinheit und/oder eine Nachkläreinheit umfaßt.

Geschickterweise wird zum Beispiel erfindungsgemäß eine Belebungseinheit eingesetzt, bei welcher die in der europäischen Patentanmeldung 857 697 beschriebene Verfahrensweise zum Einsatz kommt.

Des Weiteren ist vorteilhafterweise auch eine Nachkläreinheit gemäß der Erfindung vorgesehen, wobei die Nachkläreinheit zum Beispiel wie in der europäischen Patentanmeldung 1 297 877 beschrieben ausgeführt ist.

Gemäß der Erfindung wird der Klärstufe nachgeschaltet mindestens ein Sensor zur Ermittlung der Konzentration von mindestens einem Störstoff vorgesehen ist.

Die Konzentration von einem oder mehreren Störstoffen in dem geklärten Schmutzwasser wird gemessen und in Abhängigkeit der Konzentration das geklärte Schmutzwasser in die Inertreinigungsstufe geleitet wird. Die Aufgabe der Inertreinigungsstufe (der ersten oder auch einer zweiten) ist es, die Konzentration an Störstoffen des Brauchwassers zu reduzieren. Geschickterweise wird dabei der Sensor so ausgebildet, daß er in der Lage ist, eine Konzentration von mehreren Störstoffen zu messen. Es kann zum Beispiel ein elektrisch wirkender Sensor vorgesehen werden, der die Leitfähigkeit des geklärten Schmutzwassers ermittelt und so einen Rückschluß auf die gelöste Salzkonzentration gibt.

Der Anwendungsbereich von Sensoren ist sehr groß, das bedeutet, daß für die verschiedensten Störstoffe, seien sie nun inert oder nicht, Konzentrationswerte ermittelt werden können, aufgrund derer dann entschieden werden kann, ob das geklärte Schmutzwasser in einer nachgeschalteten Inertreinigungsstufe gereinigt wird oder nicht. Grundsätzlich ist vorgesehen, daß die Inertreinigungsstufe sowohl inerte wie auch nichtinerte Störstoffe abzubauen vermag.

Natürlich ist es möglich, mehrere gleich oder verschieden wirkende Inertreinigungsstufen vorzusehen, um insbesondere verschiedenen Verschmutzungsszenarien gerecht zu werden. So ist es zum Beispiel möglich, daß bei einer hohen Konzentration von Salzen das Schmutzwasser in eine erste Inertreinigungsstufe geleitet wird, für den Fall aber, daß eine hohe Tensid-Konzentration oder eine andere Konzentration von in den Reinigungsmitteln beinhalteten Chemikalien ermittelt wird, das geklärte Schmutzwasser in eine andere, zweite Inertreinigungsstufe geleitet wird.

Durch eine Parallelschaltung entsprechend identisch wirkender Inertreinigungsstufen ist es möglich, die Kapazität beziehungsweise die Leistung zur Reinigung entsprechenden Schmutzwassers zu erhöhen. Durch eine geschickte Rohrleitungsführung unter Verwendung entsprechender Steuerventile, ist es alternativ möglich, die verschiedenen Inertreinigungsstufen auch seriell hintereinander angeordnet sind, um somit das Reinigungsergebnis (= niedrige Konzentration an Störstoffen) zu verbessern.

Eine Steuereinheit ist vorgesehen, an welche der Sensor den gemessenen Konzentrationswert leitet und die Steuereinheit in Abhängigkeit eines Vergleiches des gemessenen Konzentrationswertes mit einem Soll-Wert, auf ein Mehr-Wege-Ventil zur optionalen Einleitung des geklärten Schmutzwassers in die Inertreinigungsstufe wirkt. Die Steuereinheit ist natürlich auch in der Lage eine Mehrzahl von Sensoren zur Überwachung der Konzentration unterschiedlicher Störstoffe zu kontrollieren und, je nach vorgebbaren Algorithmen dann das Schmutzwasser in eine oder auch mehrere Inertreinigungsstufe/n zu leiten, indem die Steuereinheit dann ein entsprechendes Mehr-Wege-Ventil steuert. Natürlich ist es möglich, daß die Steuereinheit auch auf eine Mehrzahl von Mehr-Wege-Ventilen wirkt, um zum Beispiel entsprechende mehrstufige Reinigungsprozesse für das geklärte Schmutzwasser durchzuführen. Dies ist insbesondere dann günstig, wenn die Konzentration von mehreren Störstoffen untolerabel hoch ist.

Ein weiterer Vorteil der Erfindung liegt darin, daß durch die optionale zusätzliche Reinigung des Schmutzwassers in einer Inertreinigungsstufe auch ein Schutzmechanismus für die Belebungseinheit besteht. Der Abbauprozeß in der Belebungseinheit erfolgt durch Mikroorganismen. Die Lebensumgebung dieser Mikroorganismen ist unter Umständen verhältnismäßig eng, das heißt, eine zu hohe Konzentration von Salzen oder ein unpassender pHwert kann dazu führen, daß diese Organismen in ihrem Wachstum behindert werden oder sogar zerstört werden. Eine solche Gefahr besteht bei einem regelmäßigen Eintrag von Frischwasser nicht. Ist aber der Frischwasserverbrauch sehr gering oder ist dieser Null, so kann ein entsprechender Aufkonzentrationsprozeß die Wirksamkeit der Belebungseinheit beeinträchtigen.

Es ist gefunden worden, daß insbesondere die Konzentration von Salzen, Schwermetallen, Abbauprodukten der Klärstufe und/oder Bestandteile von Reinigungsmitteln, Tensiden und der dergleichen in dem erfindungsgemäßen Verfahren beziehungsweise der Vorrichtung ungünstig sein kann. Daher ist vorgesehen, daß die Sensibilität des oder der Sensoren gerade auf diese Stoffe ausgerichtet ist/sind und so bei Bedarf entsprechende Reinigungsschritte des Schmutzwassers eingeleitet werden.

Zum Beispiel ist nicht auszuschließen, daß bei der Klärstufe Abbauprodukte entstehen die stören und zum Beispiel durch die vorgesehene Belebungseinheit und so weiter nicht vollständig bis zu einem nicht störendem Niveau abgebaut werden können. Auch besteht die Gefahr, daß Bestandteile der Reinigungsmittel, wie sie zum Beispiel für das Reinigen von Fahrzeugen in Autowaschanlagen vorgesehen sind, durch die Klärstufe nicht oder kaum beeinflußt werden und diese Stoffe entsprechend aufkonzentriert werden.

In einer bevorzugten Variante der Erfindung ist vorgesehen, daß die Inertreinigungsstufe als Destillationseinheit oder als Vakuumverdampfer ausgebildet ist. Die beiden beschriebenen Realisierungsvarianten einer Inertreinigungsstufe sind im Sinne der Erfindung als physikalisch wirkend zu bezeichnen. Durch die Destillationseinheit wird der unterschiedliche Siedepunkt von in dem Schmutzwasser gelösten flüssigen Bestandteilen, ähnlich wie bei der Alkoholdestillation verwendet. Ähnliches wird auch bei dem Vakuumverdampfer eingesetzt, wobei dort mit unterschiedlichen Dampfdrücken der Bestandteile gearbeitet wird. Als weiterer Inertreinigungsporzeß ist auch vorgesehen, eine Umkehrosmose einzusetzen.

In einer bevorzugten Variante der Erfindung ist vorgesehen, daß eine Verbindungsleitung von der Nachkläreinheit zum Schlammfang oder dessen Zulauf für den Abtransport von in der Nachkläreinheit antransportierten Schlamms vorgesehen ist. Der in der Nachkläreinheit anfallende Schlamm setzt sich aufgrund der Gravitation am Boden der Nachkläreinheit ab. Mit zunehmender Betriebsdauer läuft man Gefahr, daß sich die Nachkläreinheit zusetzt. Durch die Anordnung einer entsprechenden Verbindungsleitung von der Nachkläreinheit zum Schlammfang wird sichergestellt, daß der in der Nachkläreinheit anfallende Schlamm in den Schlammfang abtransportiert wird. Dies kann zwangsweise, zum Beispiel durch die Anordnung einer entsprechenden Förderpumpe in der Verbindungsleitung erfolgen.

In einer bevorzugten Variante der Erfindung ist vorgesehen, daß die erfindungsgemäße Vorrichtung nicht nur eine Inertreinigungsstufe aufweist, sondern der Inertreinigungsprozeß mehrstufig ausgebildet ist, also einer ersten Inertreinigungsstufe weitere Inertreinigungsstufen nachgeschaltet sind. Dies wird insbesondere dafür ausgenützt, daß das in einer ersten Inertreinigungsstufe aufkonzentrierte Schmutzwasser einer zweiten Inertreinigungsstufe zugeleitet wird. Durch den Inertreinigungsprozeß wird die Schmutzfracht in dem verbleibenden Schmutzwasser aufkonzentriert. Um zu vermeiden, daß eine sehr hohe Konzentration von Schmutz im Schmutzwasser zum Beispiel in die Nachkläreinheit gelangt, wird bei dieser erfindungsgemäßen Variante vorgesehen, daß solches, mit Schmutzpartikeln aufkonzentriertes Schmutzwasser, einer zweiten oder gegebenenfalls auch weiteren Inertreinigungsstufen zugeleitet wird und dort entsprechend aufbereitet wird, wobei der hierbei ausgeschiedene Schmutz zum Beispiel über einen Ablauf entsorgt wird.

Es ist daher durchaus günstig, daß einer Inertreinigungsstufe auch ein Sensor zur Ermittlung der Konzentration von mindestens einem Störstoff nachgeschaltet ist, um, aufgrund dieser Messung, zu entscheiden, wie das aufkonzentrierte Schmutzwasser weiterbehandelt wird.

Hierzu besteht grundsätzlich auch die Möglichkeit, anstelle dieses aufkonzentrierte Schmutzwasser über eine Zuleitung in eine zweite Inertreinigungsstufe zu leiten, dieses Schmutzwasser der Nachkläreinheit zuzuleiten. Gegebenenfalls wird dies mit einer entsprechenden Förderpumpe unterstützt. Dabei ist es erfindungsgemäß vorgesehen, daß das aufkonzentrierte Schmutzwasser nach der ersten Inertreinigungsstufe zum Beispiel in den Zulauf der Nachkläreinheit oder direkt in den Schrägklärerbereich der Nachkläreinheit eingebracht wird, wodurch sich zwar die hydraulische Belastung dieses Bereiches entsprechend erhöht, da mehr Schmutzwasser antransportiert wird, aber der

Absetzprozeß im Schrägklärerbereich zusätzlich ausgenützt wird.

Dem Schrägklärerbereich nachgeschaltet ist ein Vorlagebehälter vorgesehen, der als Vorratsreservoir dient. Selbstverständlich ist es möglich, daß das aufkonzentrierte Schmutzwasser auch dem Vorlagebehälter zugeleitet wird. Natürlich sind alle vorgenannten Varianten miteinander variierbar, in den Zuleitungen sind dann entsprechende Mehr-Wege-Ventile vorgesehen, die händisch oder automatisch (zum Beispiel durch eine gegebenenfalls auch zentral angeordnete Steuerung) betätigbar sind.

Natürlich kann es sich auch ergeben, daß der Verunreinigungsgrad des nach einer ersten Inertreinigungsstufe aufkonzentrierten Schmutzwassers so hoch ist, daß es günstiger ist, es direkt in den Ablauf abzuleiten. Der Ablauf wird dabei zum Beispiel in den Kanal oder in eine entsprechende Abfallentsorgung oder Schlammentsorgung einmünden.

Des Weiteren wird erfindungsgemäß vorgeschlagen, daß in der Nachkläreinheit, insbesondere deren Vorlagebehälter und/oder in der Belebungseinheit je ein Füllstandsensor vorgesehen ist und eine Steuereinheit aufgrund der von dem Füllstandsensor gemessenen Füllstand auf ein Mehr-Wege-Ventil zur optionalen Einleitung des geklärten Schmutzwassers in die Inertreinigungsstufe wirkt.

Durch die Füllstandsensoren ist es möglich, die hydraulische Belastung der gesamten Vorrichtung zu überwachen. Ergibt es sich nämlich, daß ein verhältnismäßig großer Schmutzwasseranfall besteht, so kann durch Hinzuschalten der Inertreinigungsstufen die Aufbereitungsleistung entsprechend erhöht werden.

Da sich ein größerer Schmutzwasseranfall bereits in der der Nachkläreinheit vorgeschalteten Belebungseinheit abzeichnet, ist es auch günstig, den Füllstand schon in der Belebungseinheit zu überwachen. Die Füllstandsensoren wie auch die anderen Sensoren sind handelsüblich ausgestaltet und ausreichend resistent gegen das unter Umständen auch aggresive Schmutzwasser. Die Daten der Füllstandsensoren werden von einer Steuereinheit, die gegebenenfalls auch die Sensoren überwacht, ausgelesen. Die Steuereinheit wirkt, ähnlich wie die Sensoren, auf Mehr-Wege-Ventile.

In einer bevorzugten Variante der Erfindung wird eine Sensibilität des Sensors für Salze, Schwermetalle, Abbauprodukten der Klärstufe und/oder Bestandteile von Reinigungsmitteln, Tensiden und dergleichen vorgesehen. Die Sensibilität des Sensors wird natürlich für die Störstoffe entsprechend optimiert. Dabei betrifft dies sowohl den Sensor, welcher der Klärstuffe nachgeschaltet ist wie auch den Sensor, der der Inertreinigungsstufe nachgeschaltet ist.

Darüberhinaus ist aber auch in einer erfindungsgemäßen Variante vorgesehen, daß die Steuerung, insbesondere aufgrund der Daten der Sensoren die die Störstoffe überwachen oder auch der Füllstandsensoren, auf Druck- beziehungsweise Förderpumpen der Vorrichtung wirkt. So kann zum Beispiel ein gewisser Umpumpprozeß beschleunigt werden oder aber auch die Filterleistung durch Erhöhung des Druckniveaus einer Druckpumpe entsprechend verändert werden. Natürlich ist es auch möglich, die Förderleistung durch die Steuerung mit Hilfe dieser erfindungsgemäßen Variante anzupassen.

Neben einer Steuerung des absoluten Drucks durch die Steuerung ist aber auch vorgesehen, daß die Steuerung über eine Bestimmung des Differenzdruckes die Vorrichtung überwacht. Es werden dann zum Beispiel mehrere Drucksensoren angeordnet und das Maß des Differenzdruckes mindestens zweier solcher Sensoren bestimmt den Steuer-Regel-Kreis einer Pumpe.

In diesem Zusammenhang wird insbesondere darauf hingewiesen, daß alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche, also vorrichtungsgemäße Merkmale können auch im Rahmen der Vorrichtungsansprüche berücksichtigt und beansprucht werden und zählen ebenfalls zur Erfindung und zur Offenbarung.

Des Weiteren umfaßt die Erfindung eine Autowaschanlage mit einer Vorrichtung, wie diese hier beschrieben worden ist. Gerade bei den Autowaschanlagen, die zum Beispiel als Autowaschstraßen oder Autoportalanlagen bekannt sind, wird ein erheblicher Vorteil erreicht. Durch die dort angestrebte Reduktion des Frischwasserverbrauches ist eine entsprechende Aufkonzentrierung von (inerten) Störstoffen zu beobachten. Durch die erfindungsgemäße Ausgestaltung der Autowaschanlagen wird erreicht, daß die Brauchwasseraufbereitung, insbesondere wenn diese biologisch durchgeführt wird, auch ohne den Eintrag von Frischwasser funktionsfähig bleibt, da durch eine entsprechende Sensibilität gerade von Störstoffen die für die Belebungseinheit nachteilig sind, diese geschützt werden kann. Durch das gezielte Beeinflussen der Konzentration von im Brauchwasser gelösten Salzen ist es möglich das Brauchwasser so aufzubereiten, daß ein möglichst optimales Waschergebnis vorliegt. Des Weiteren stellt die erfindungsgemäße Anordnung auch einen Vorteil bei der Betriebssicherheit dar. Es ist bekannt, in den zum Waschen von Fahrzeugen eingesetzten Reinigungsmitteln geringe Konzentrationen von Substanzen erhalten sind, die in einer höheren Konzentration gesundheitsgefährdent sind. Der Einsatz dieser Stoffe in den Reinigungsmitteln ist aufgrund der niedrigen Konzentration dort unbedenklich, jedoch kann durch eine entsprechende Aufkonzentration in den neuartigen Autowaschanlagen oder bei anderen Prozessen, bei welchen ein möglichst geringer Frischwasserverbrauch gewünscht ist, hier eine Gesundheitsgefährdung drohen. Durch einen gezielten Einsatz der Erfindung gerade auf solche Störstoffe wird dieses Risiko erheblich verringert. Die vorgenannten Vorteile ergeben sich auch bei anderen Anwendungsfällen des/der erfindungsgemäßen Verfahrens beziehungsweise Vorrichtung.

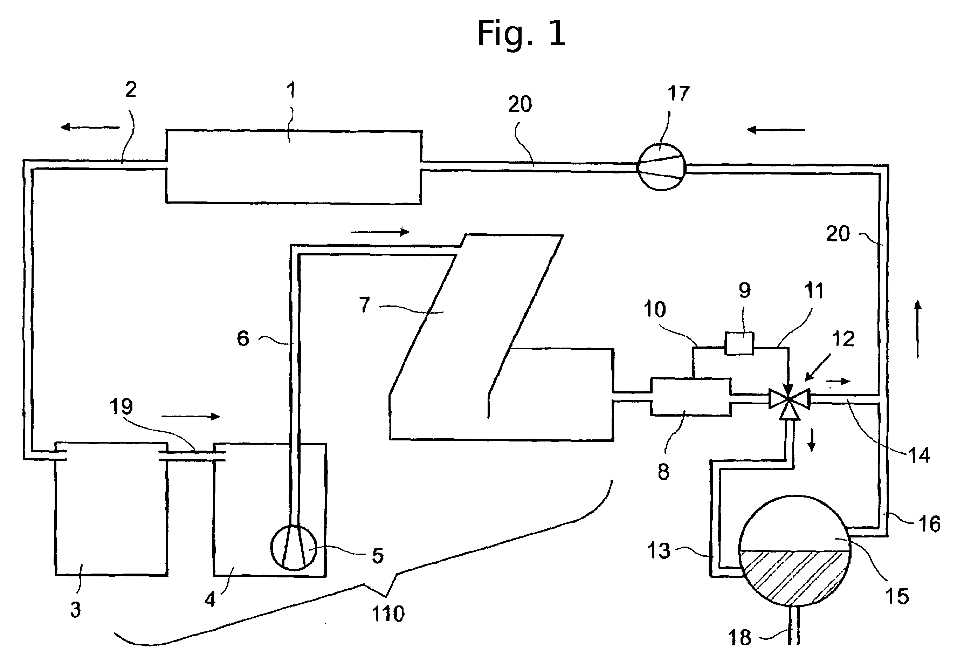

In der Zeichnung ist die Erfindung schematisch dargestellt. Es zeigen
- Fig. 1 bis 3: die erfindungsgemäße Vorrichtung in verschiedenen Varianten je in einem Blockschaltbild.

Mit diesen Figuren wird auch das erfindungsgemäße Verfahren beschrieben.

Die erfindungsgemäße Vorrichtung findet zum Beispiel im Zusammenhang mit Autowaschanlagen 1 Verwendung (siehe zum Beispiel Fig. 1). Allgemein können an Stelle von Autowaschanlagen 1 aber auch andere Schmutzwassererzeuger vorgesehen sein. Dies können zum Beispiel die Abwasserleitungen von Waschplätzen zum Beispiel für Autos, aber auch die Schmutzwasserfänger bei Tankstellen sein.

Das von der Autowaschanlage/dem Schmutzwassererzeuger 1 erzeugte Schmutzwasser wird über die Schmutzwasserleitung 2 zunächst in einen Schlammfang 3 geleitet. Der Schlammfang 3 ist wie ein Absetzbecken ausgebildet und erlaubt es, daß die ungelösten aber mittransportierten Schwebteilchen sich hier absetzen können. Der Schlammfang 3 wird regelmäßig geleert.

Dem Schlammfang 3 nachgeschaltet ist eine Belebungseinheit 4 vorgesehen. Der Schlammfang 3 und die Belebungseinheit 4 werden durch eine Verbindungsleitung 19 miteinander verbunden.

Die Strömungsrichtung des Schmutzwassers beziehungsweise des entsprechend aufbereiteten Schmutzwassers (Brauchwassers) ist mit einem Pfeil gekennzeichnet.

In der Belebungseinheit 4 erfolgt eine Zersetzung des insbesondere mit Öl beziehungsweise Mineralöl belasteten Schmutzwassers, wie es zum Beispiel insbesondere in Autowaschanlagen anfällt. An dieser Stelle können aber auch andere, zum Beispiel unter Einsatz von Mikroorganismen durchgeführte Klärungsprozesse stattfinden. Durch die Belebungseinheit wird ein erheblicher Beitrag zur Klärung des Schmutzwassers geleistet, weil insbesondere die ansonsten schwer entfernbaren Ölbestandteile herausgeklärt werden. Die dabei anfallende Biomasse oder der Bioschlamm wird dabei insbesondere in einer Nachkläreinheit 7 vom Schmutzwasser getrennt. Dabei wird die sich in der Belebungseinheit 4 befindliche Flüssigkeit durch die Tauchpumpe 5 über die Pumpleitung 6 in die Nachkläreinheit 7 gepumpt. Dadurch wird die Belebungseinheit möglichst freigehalten von sich absetzendem Schlamm und die Funktionsfähigkeit der Belebungseinheit nicht beeinträchtigt. Die Nachkläreinheit 7 ist dabei so ausgebildet, daß sie leicht zu reinigen ist.

Der Schlammfang 3, Belebungseinheit 4 sowie die der Belebungseinheit 4 nachgeschaltete Nachklareinheit 7 bilden die Klärstufe 110.

Dabei gehört die Nachklärungseinheit 7 nicht zwingend zur Klärstufe, die Klärstufe 110 kann erfindungsgemäß auch nur durch den Schlammfang 3 und die Belebungseinheit 4 gebildet sein.

Bei den bekannten Anordnungen wird das am Ausgang 21 der Nachkläreinheit 7 anfallende geklärte Schmutzwasser wieder der Brauchwasservorlage zugeleitet und dann wieder zurück in den Schmutzwassererzeuger/die Autowaschanlage 1 geschickt.

Es ist klar, daß, wenn nun ein verhältnismäßig geringerer Frischwassereintrag vorgesehen ist, die Konzentration von Störstoffen ansteigen kann. Geschickterweise wird daher nun an dem Ausgang 21 ein Sensor 8 angeordnet, der in der Lage ist, die Konzentration zumindest eines (gegebenenfalls inerten) Störstoffes zu messen. Dieser so gemessene Konzentrationswert wird über die Sensorleitung 10 einer Steuerung 9 zugeleitet.

In der Steuerung 9 erfolgt ein Vergleich dieses Konzentrationwertes mit einem Soll-Wert für den entsprechenden Störstoff. Entsprechend dieses Vergleiches wird dann über die Steuerleitung 11 Einfluß genommen auf ein Mehr-Wege-Ventil 12. Sensorleitung 10 und Steuerleitung 11 sind elektrische Leitungen, die übrigen Leitungen sind zum Beispiel als Rohrleitungen oder als Rinnen ausgebildet.

Ist der gemessene Konzentrationswert im tolerablen Bereich, so wird das geklärte Schmutzwasser über die Leitung 14 der Brauchwasservorlage 20 zugeführt.

Ist der gemessene Konzentrationswert für den Störstoff nicht tolerabel, also zu hoch oder gegebenenfalls bei anderen Anwendungsfällen auch zu gering, so wird das geklärte Schmutzwasser über die Verbindungsleitung 13 in die Inertreinigungsstufe 15 geleitet.

An der Inertreinigungsstufe 15 wird ausgangsseitig das dann vorliegende geklärte und gereinigte Schmutzwasser über die Leitung 16 der Brauchwasservorlage 20 zugeführt. Die Verbindungsleitung 16 und die Leitung 14 sind dabei geschickterweise zum Beispiel durch ein T-Stück zusammengeführt, durch eine Pumpe 17 in der Brauchwasservorlage 20 wird das anfallende aufbereitete Schmutzwasser (= Brauchwasser) wieder in den Schmutzwassererzeuger/die Autowaschanlage 1 geleitet beziehungsweise gepumpt.

Die Inertreinigungsstufe 15 ist zum Beispiel als Destillationseinheit oder als Vakuumverdampfer ausgebildet. Die bei dem Reinigungsprozeß zurückbleibenden Bestandteile werden durch die Abfluß 18 entsorgt.

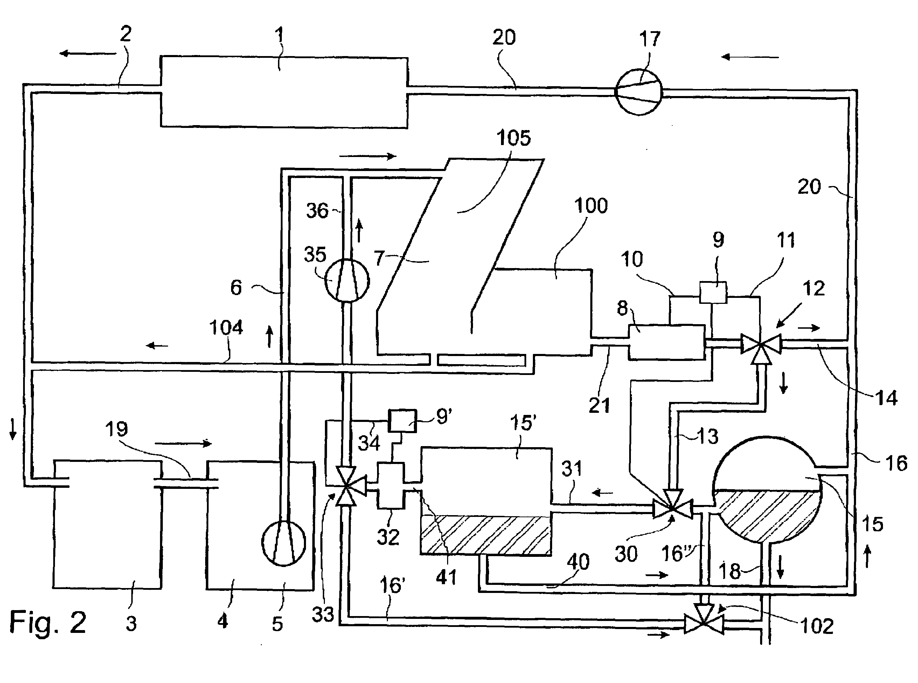

In Fig. 2 ist eine weitere Variante nach der Erfindung gezeigt. Die hier dargestellte Variante konkretisiert die Anordnung nach Fig. 1, weswegen an dieser Stelle nur auf die neu hinzugetretenen Merkmale Bezug genommen wird.

In dem hier gezeigten Ausführungsbeispiel schließt sich an das Mehr-Wege-Ventil 12, wo die Leitung 13 zur Inertreinigungsstufe 15 abzweigt, vor der Inertreinigungsstufe 15 ein weiteres Mehr-Wege-Ventil 30 an. Auch dieses zweite Mehr-Wege-Ventil 30 wird gesteuert von der Steuerung 9. Eine Steuerleitung ist angedeutet. An dieser Stelle kann nun entschieden werden, ob das geklärte Schmutzwasser in die rechte Inertreinigungsstufe 15 oder in die linke Inertreinigungsstufe 15' geleitet werden soll. Die Auswahl erfolgt aufgrund von Parametern, die in der Steuerung 9 hinterlegt sind und entsprechend ausgewertet werden. Solche Parameter können zum Beispiel die Leistungsfähigkeit der Inertreinigungsstufe oder ihre Spezialisierung für das Aufbereiten des Schmutzwassers bei entsprechender Störstoffkonzentration sein.

Die Ausgestaltung der Inertreinigungsstufe 15' kann daher gleich oder verschieden zu der der Inertreinigungsstufe 15 sein. Das hier entsprechend aufbereitete Wasser wird dann über die Leitung 40, die nach einem T-Stück mit der Leitung 16 einmündet, zur Brauchwasservorlage 20 führen.

Durch den Reinigungsprozeß in der Inertreinigungsstufe 15' wird natürlich die Störstoffkonzentration in dem Schmutzwasser entsprechend erhöht. Dieses Schmutzwasser verläßt die Inertreinigungsstufe 15' über den Ausgang 41. Dem Ausgang 41 nachgeschaltet befindet sich wiederum ein Sensor 32, der, wie der Sensor 8, auf die Messung einer oder mehrerer Störstoffkonzentration/en spezialisiert ist und diesen Meßwert einer Steuerung 9' zuleitet. Die Steuerung 9' ist gegebenenfalls mit der Steuerung 9 zusammengefaßt oder Teil einer solchen Steuerung, sie kann aber auch zweigeteilt ausgebildet sein. Es kann selbstverständlich eine Zentralsteuerung vorgesehen sein, die einerseits die Steuerung 9 für den Sensor 8, wie auch die Steuerung 9' für den Sensor 32 leistet. Aufgrund der gemessenen Werte wird ein, dem Sensor 32 in Fließrichtung des Schmutzwassers nachgeschaltetes Mehr-Wege-Ventil 33 über die Steuerleitung 34 gesteuert.

Für den Fall, daß die Schmutzwasserkonzentration zu hoch ist, wird das aufkonzentrierte Schmutzwasser über die Leitung 16' in Richtung des Abflusses 18 geleitet. Es besteht aber noch die Möglichkeit, jetzt in einem zweistufigen Reinigungsprozeß der ersten Inertreinigungsstufe 15' die zweite Inertreinigungsstufe 15 nachzuschalten und über das Mehr-Wege-Ventil 102 und der Zuleitung 16'' das aufkonzentrierte Schmutzwasser in die erste Inertreinigungsstufe 15 einzuleiten. Ist die Störstoffkonzentration zu groß, so daß auch der Einsatz der zweiten Inertreinigungsstufe 15 nicht erfolgversprechend ist, so kann, unter Einsparung der für den Reinigungsprozeß notwendigen Energie, das Schmutzwasser gleich in den Ablauf 18 durch das Mehr-Wege-Ventil 102 durchgeleitet werden.

Ist die Qualität des aufkonzentrierten Schmutzwassers nach der Inertreinigungsstufe 15' tolerabel, so wird das anfallende Schmutzwasser über die Pumpe 35 und der Zuleitung 36 zurück in die Nachkläreinheit 7 geleitet. Das aufkonzentrierte Schmutzwasser erfährt dann nochmals einen Nachklärprozeß und durchläuft diesen Zyklus unter Umständen mehrfach.

Dabei mündet die Zuleitung 36 in die Pumpleitung 6, die die Belebungseinheit 4 mit der Nachkläreinheit 7 verbindet. In diesem Fall erhöht sich natürlich die hydraulische Belastung des Schrägklärerbereichs 105, was entsprechend dimensioniert wird.

Die Nachkläreinheit 7 besteht dabei zunächst aus dem Schrägklärerbereich 105 und dem nachfolgenden Vorlagebreich 100. Die Zuleitung 36 kann auch direkt in den Schrägklärerbereich 105 einmünden.

Da unter Umständen der Schlammanfall in der Nachkläreinheit 7 verhältnismäßig groß sein kann, wird optional vorgesehen, daß eine Verbindungsleitung 104 von der Nachkläreinheit 7 zum Schlammfang 3 besteht, die dafür sorgt, daß der auf den Boden der Nachkläreinheit 7 absinkende Schlamm abtransportiert wird und sich im Schlammfang 3 niedersetzt.

Natürlich sind eine Vielzahl von weiteren (nicht gezeigten) Pumpen in der Vorrichtung vorgesehen. So befinden sich zum Beispiel Pumpen in der Verbindungsleitung 104, aber auch in der Zuleitung 13 zwischem dem Mischventil oder Mehr-Wege-Ventil 12 beziehungsweise dem Mehr-Wege-Ventil 30 oder der Inertreinigungsstufe 15. Auch nach dem Mehr-Wege-Ventil 30 und der weiteren Inertreinigungsstufe 15' ist optional eine Förder- oder Druckpumpe vorgesehen. Insbesondere ist es möglich durch den Einsatz einer entsprechenden Druckpumpe (bevorzugt einer Differenzdruckpumpe) den Reinigungsprozeß entsprechend zu steuern.

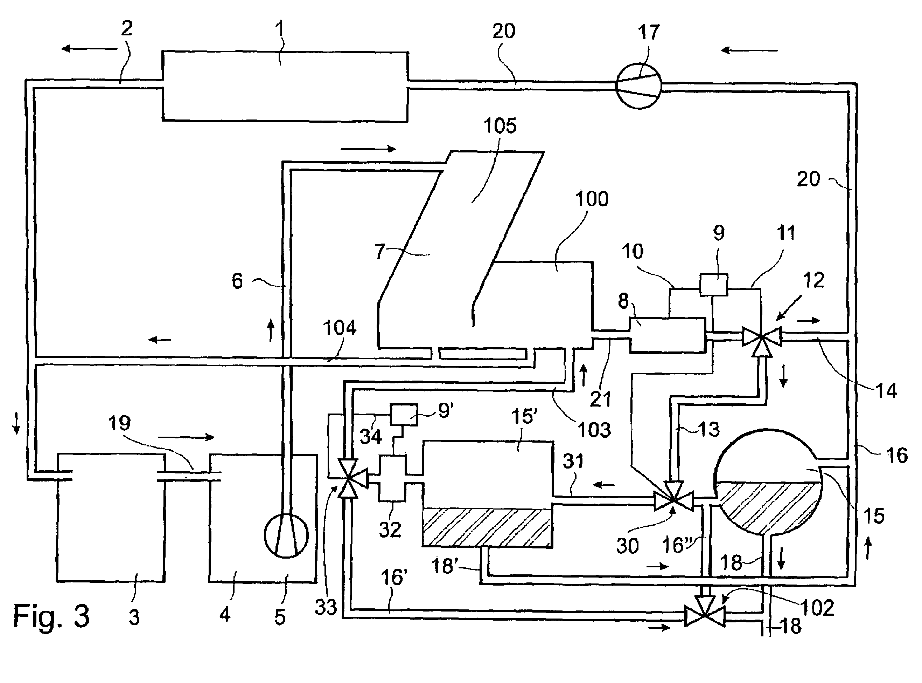

Der einzige Unterschied zwischen Fig. 2 und Fig. 3 liegt in dem Bereich nach dem Mehr-Wege-Ventil 33. In der Variante nach Fig. 3 endet die Zuleitung 103 im Vorlagebereich 100 der Nachkläreinheit 7 und belastet so nicht den Schrägklärerbereich 105. Dieser muß bei einer solchen erfindungsgemäßen Variante hydraulisch nicht anders ausgelegt werden.

## Patentansprüche

1. Vorrichtung für die Brauchwasseraufbereitung in einer Autowaschanlage (1), wobei eine Klärstufe (110) für die Klärung des anfallenden mineralölhaltigem Schmutzwassers vorgesehen ist, **dadurch gekennzeichnet, dass** der Klärstufe (110) eine Inertreinigungsstufe (15) nachgeordnet ist und der Klärstufe (110) nachgeschaltet mindestens ein Sensor (8) zur Ermittlung der Konzentration von mindestens einem inerten Störstoff und eine Steuereinheit (9, 9') vorgesehen sind, an die der Sensor den gemessenen Konzentrationswert weiterleitet und die Steuerung mit einem Mehrwegventil (12, 30) verbunden ist, das für die Einleitung des geklärten Schmutzwassers in die Inertreinigungsstufe (15) oder die Zuführung des geklärten Schmutzwassers in die Brauchwasservorlage (20) vorgesehen ist.

2. Vorrichtung nach Anspruch 1, **dadurch gekennzeichnet, dass** die Klärstufe (110) ein- oder mehrstufig ausgebildet ist und/oder die Klärstufe (110) einen Schlammfang (3), eine Belebungseinheit.(4) und/oder Nachkläreinheit (7) umfaßt.

3. Vorrichtung nach einem der vorhergehenden Ansprüche 1 und 2, **dadurch gekennzeichnet, dass** eine Verbindungsleitung (104) von der Nachkläreinheit (7) zum Schlammfang (3) oder dessen Zulauf für den Abtransport von in der Nachkläreinheit (7) anfallenden Schlamms vorgesehen ist.

4. Vorrichtung nach einem der vorhergehenden Ansprüche 1 bis 3, **dadurch gekennzeichnet, dass** in der Brauchwasservorlage (20) das geklärte bzw. in der Inertreinigungsstufe (15, 15') gereinigte Schmutzwasser als Brauchwasser zur Verfügung steht.

5. Vorrichtung nach einem der vorhergehenden Ansprüche 1 bis 4, **dadurch gekennzeichnet, dass** in der Nachkläreinheit (7), insbesondere deren Vorlagebehälter (100) und/oder in der Belebungsstufe (4) je ein Füllstandsensor vorgesehen ist und die Steuereinheit (9, 9') aufgrund dem von dem Füllstandsensor gemessenen Füllstand auf das Mehrwegeventil (12) zur optionalen Einleitung des geklärten Schmutzwassers in die Inertreinigungsstufe(n) (15, 15') wirkt.

6. Vorrichtung nach einem der vorhergehenden Ansprüche 1 bis 5, **dadurch gekennzeichnet, dass** die Steuerung (9, 9') aufgrund der Daten der Sensoren (8, 32) und/oder der Füllstandsensoren, auf Druck- oder Förderpumpen der Vorrichtung wirkt.

7. Vorrichtung nach einem der vorhergehenden Ansprüche 1 bis 6, **dadurch gekennzeichnet, dass** die Inertreinigungsstufe (15, 15') als Destillationseinheit oder als Vakuumverdampfer ausgebildet ist.

8. Vorrichtung nach einem der vorhergehenden Ansprüche 1 bis 7, **dadurch gekennzeichnet, dass** mindestens zwei Inertreinigungsstufen (15, 15') wahlweise parallel oder seriell miteinander in Verbindung stehen.

9. Vorrichtung nach einem der vorhergehenden Ansprüche 1 bis 8, **dadurch gekennzeichnet, dass** die Inertreinigungsstufe (15, 15') mit physikalisch, chemisch und/oder biologisch wirkenden Prozessen ausgebildet ist.

10. Vorrichtung nach einem der vorhergehenden Ansprüche 1 bis 9, **gekennzeichnet durch** eine Sensitivität des Sensors (8, 32) für Salze, Schwermetalle, Abbauprodukten der Klärstufe und/oder Bestandteile von Reinigungsmitteln und Tensiden.

11. Verfahren zur Brauchwasseraufbereitung in einer Autowaschanlage mit einer Vorrichtung nach einem der vorhergehenden Ansprüche 1 bis 10, wobei in Strömungsrichtung zunächst mineralölhaltiges Schmutzwasser in einer Klärstufe geklärt wird, wobei nachdem das Schmutzwasser geklärt ist, die Konzentration von einem oder mehreren inerten Störstoff(en) gemessen wird, **dadurch gekennzeichnet, dass** eine Steuereinheit (9, 9') in Abhängigkeit eines Vergleiches des gemessenen Konzentrationswertes mit einem Sollwert auf ein Mehrwegventil (12, 30, 33) zur optionalen Einleitung des geklärten Schmutzwassers in eine Inertreinigungsstufe (15, 15') wirkt und in Abhängigkeit der Konzentration das geklärte Schmutzwasser in die Inertreinigungsstufe (15, 15') oder in die Brauchwasservorlage (20) geleitet wird.

12. Verfahren nach Anspruch 11, **dadurch gekennzeichnet, dass** ein Sensor (8, 32) den gemessenen Konzentrationswert an die Steuereinheit (9, 9') leitet.

13. Verfahren nach einem der vorhergehenden Ansprüche 11 und 12, **dadurch gekennzeichnet, dass** das Schmutzwasser in einem Schlammfang (3), einer Belebungseinheit (4) und/oder Nachklärungseinheit (7) geklärt wird.

14. Verfahren nach einem der vorhergehenden Ansprüche 11 bis 13, **dadurch gekennzeichnet, dass** das geklärte und gegebenenfalls in der Inertreinigungsstufe (15, 15') gereinigte Schmutzwasser als Brauchwasser wieder zur Verfügung gestellt wird.

15. Verfahren nach einem der vorhergehenden Ansprüche 11 bis 14, **dadurch gekennzeichnet, dass** das in einer ersten Inertreinigungsstufe (15, 15') aufkonzentrierte Schmutzwasser einer zweiten Inertreinigungsstufe (15', 15) zugeleitet wird.

16. Verfahren nach einem der vorhergehenden Ansprüche 11 bis 15, **dadurch gekennzeichnet, dass** das in der Inertreinigungsstufe (15, 15') aufkonzentrierte Schmutzwasser der Nachkläreinheit (7), entweder in deren Zulauf (6), in deren Schrägklärerbereich (105) oder in deren Vorlagebehälter (100) zugeleitet wird oder das in der Inertreinigungsstufe (15, 15') aufkonzentrierte Schmutzwasser in den Ablauf (18) geleitet wird.

17. Autowaschanlage mit einer Vorrichtung nach einem der vorhergehenden Ansprüche 1 bis 10.

## Claims

1. Device for the processing of industrial water in a car wash (1), wherein a clarifying stage (110) is provided for clarifying the occurring mineral oil-loaded waste water, **characterized in that** an inert cleaning stage (15) is arranged after the clarifying stage (110), and at least one sensor (8) for determining the concentration of at least one inert impurity and a control unit (9, 9') to which the sensor transmits the measured concentration value, are provided after the clarifying stage (110), and the control is connected to a multiple way valve (12, 30) provided for leading the clarified waste water into the inert cleaning stage (15) or for leading the clarified waste water into the industrial water tank (20).

2. Device according to claim 1, **characterized in that** the clarifying stage (110) is configured with one or multiple stages, and/or the clarifying stage (110) comprises a silt trap (3), an activation unit (4) and/or a post-clarifying unit (7).

3. Device according to one of the preceding claims 1 and 2, **characterized in that** a connecting line (104) from the post-clarifying unit (7) to the silt trap (3) or its feed is provided for removing sludge occurring in the post-clarifying unit (7).

4. Device according to one of the preceding claims 1 to 3, **characterized in that** in the industrial water tank (20) the clarified or in the inert cleaning stage (15, 15') cleaned wastewater is available as industrial water.

5. Device according to one of the preceding claims 1 to 4, **characterized in that** in the post-clarifying unit (7), in particular its storage container (100) and/or in the activation stage (4) one level sensor each is provided, and the control unit (9, 9') acts on the multiple way valve (12) because of the level defined by the level sensor for a perfect leading of the clarified waste water into the inert cleaning stage(s) (15, 15').

6. Device according to one of the preceding claims 1 to 5, **characterized in that** the control (9, 9') acts on pressure or feed pumps of the device because of the data of the sensors (8, 32) and/or the level sensors.

7. Device according to one of the preceding claims 1 to 6, **characterized in that** the inert cleaning stage (15, 15') is configured as distillation unit or as vacuum evaporator.

8. Device according to one of the preceding claims 1 to 7, **characterized in that** at least two inert cleaning stages (15, 15') are in confection to each other optionally parallel or serial.

9. Device according to one of the preceding claims 1 to 8, **characterized in that** the inert cleaning stage (15, 15') is configured with processes acting physically, chemically, and/or biologically.

10. Device according to one of the preceding claims 1 to 9, **characterized by** a sensitivity of the sensor (8, 32) for salts, heavy metals, decomposition products of the clarifying stage and/or components of cleaning agents and tensides.

11. Method for processing industrial water in a car wash with a device according to one of the preceding claims 1 to 10, wherein in the direction of flow, first of all, mineral oil-loaded waste water is clarified in a clarifying stage, wherein, after the waste water has been clarified, the concentration of one or several inert impurity/impurities is measured, **characterized in that** a control unit (9, 9') acts, depending on a comparison of the measured value of concentration with a set value, on a multiple way valve (12, 30, 33) for a perfect leading of the clarified waste water into an inert cleaning stage (15, 15'), and, depending on the concentration, the clarified waste water is either lead into the inert cleaning stage (15, 15') or in the industrial water tank (20).

12. Method according to claim 11, **characterized in that** a sensor (8, 32) transmits the measured value of concentration to the control unit (9, 9').

13. Method according to one of the preceding claims 11 and 12, **characterized in that** the wastewater is clarified in a silt trap (3), an activation unit (4) and/or a post-clarifying unit (7).

14. Method according to one of the preceding claims 11 to 13, **characterized in that** the clarified and, if necessary, cleaned in the inert cleaning stage (15, 15') wastewater is provided again as industrial water.

15. Method according to one of the preceding claims 11 to 14, **characterized in that** the wastewater concentrated in a first inert cleaning stage (15, 15') is lead to a second inert cleaning stage (15', 15).

16. Method according to one of the preceding claims 11 to 15, **characterized in that** the waste water of the post-cleaning unit (7) upgraded in the inert cleaning stage (15, 15') is lead either into its feed (6), its inclined clarifier area (105) or its storage container (100), or the waste water upgraded in the inert cleaning stage (15, 15') is lead into a drain (18).

17. Car wash with a device according to one of the preceding claims 1 to 10.

## Revendications

1. Dispositif de recyclage des eaux usées d'une station de lavage de voitures (1) comportant un étage d'épuration (110) destine à épurer les eaux usées contentant des huiles minérales, **caractérisé en ce qu'**un étage d'épuratison des substances inertes (15) est situé en aval de l'étage d'épuration (110) ainsi qu'au minimum un capteur (8) permettant de déterminer la concentration d'au moins une substance inerte perturbatrice et un système de contrôle comportant une vanne multivoie (12, 30) destinée à acheminer l'eau épurée vers l'étage d'épuration des substances inertes (15) ou à acheminer l'eau épurée vers le réservoir d'eau épurée (20).

2. Dispositif selon la revendication 1, **caractérisé en ce que** l'étage d'épuration (110) comporte un ou plusieurs niveau (x) et/ou **en ce que** l'étage d'épuration (110) comporte un récupérateur de boues (3), un étage d'activité biologique (4) et/ou une unité d'épuration secondaire (7).

3. Dispositif selon une des deux revendications précédentes 1 ou 2, **caractérisé en ce qu'**il existe un tuyau de connexion (104) allant de l'unité d'épuration secondaire (7) vers le récupérateur de boues (3) ou vers l'arrivée d'eau du récupérateur de boues afin de transporter les boues de la station d'épuration secondaire (7).

4. Dispositif selon une des revendications précédentes 1 à 3, **caractérisé en ce que** l'eau épurée par l'étage d'épuration de substances inertes (15, 15') est stockée dans le réservoir d'eau épurée (20).

5. Dispositif selon une des revendications précédentes 1 à 4, **caractérisé en ce qu'**il existe un capteur de niveau dans l'étage d'épuration secondaire (7) et en particulier dans le réservoir d'eau épurée (100) et/ou dans l'étage d'activité biologique (4) et **en ce que** le système de contrôle (9, 9') agit sur la vanne multivoie (12) en fonction du niveau mesuré par le capteur de niveau afin de déclencher l'introduction optionnelle de l'eau épurée dans l(es) 'étage(s) d'épuration des substances inertes (15, 15').

6. Dispositif selon une des revendications précédentes 1 à 5, **caractérisé en ce que** le système de contrôle (9, 9') agit sur des pompes à pression ou des pompes de relevage du dispositif en fonction des données venant des capteurs (8, 32) et/ou des capteurs de niveau.

7. Dispositif selon une des revendications précédentes 1 à 6, **caractérisé en ce que** l'étage d'épuration de substances inertes (15, 15') fonctionne comme une unité de distillation ou d'évaporation sous vide.

8. Dispositif selon une des revendications précédentes 1 à 7, **caractérisé en ce qu'**au moins deux étages d'épuration des substances inertes (15, 15') sont interconnectés soit en parallèle, soit en série.

9. Dispositif selon une des revendications précédentes 1 à 8, **caractérisé en ce que** l'étage d'épuration des substances inertes (15, 15') est basé sur des procédés physiques, chimiques et/ou biologiques.

10. Dispositif selon une des revendications précédentes 1 à 9, **caractérisé par** une sensibilité des capteurs (8, 32) aux sels, métaux lourds, produits de décomposition de l'étage d'épuration et/ou des composés d'agents nettoyants et de tensides.

11. Procédé d'épuration d'eau d'une station de lavage de voitures comportant un dispositif selon une des revendications précédentes 1 à 10 permettant d'épurer dans le sens du courant de l'eau d'abord l'eau usée, contentant des huiles minérales, par un étage d'épuration, puis de mesurer la concentration d'une ou plusieurs des substances inertes perturbatrices, **caractérisé en ce que** le système de contrôle (9, 9') agit sur une vanne multivoie (12, 30, 33) en comparant la concentration mesurée avec une valeur spécifiée afin d'introduire de fagon optionnelle l'eau épurée dans l'étage d'épuration des substances inertes (15, 15') et ainsi d'acheminer l'eau épurée en fonction de la concentration de l'eau épurée soit vers l'étage d'épuration des substances inertes (15, 15') soit vers le réservoir d'eau épurée (20).

12. Procédé selon la revendication 11, **caractérisé en ce qu'**un capteur (8, 32) envoile la valeur de concentration mesurée vers le système de contrôle (9, 9').

13. Procédé selon une des revendications précédentes 11 ou 12, **caractérisé en ce que** l'eau usée est épurée à l'aide d'un récupérateur de boues (3) d'un étage d'épuration à activité biologique (4) et/ou à l'aide d'un étage d'épuration secondaire (7).

14. Procédé selon une des revendications précédentes 11 à 13, **caractérisé** à en ce que l'eau épurée, le cas échéant, épurée dans l'étage d'épuration des substances inertes (15, 15'), est mis à disposition comme eau utilisable.

15. Procédé selon une des revendications précédentes 11 à 14, **caractérisé en ce que** l'eau usée concentrée par un premier étage d'épuration des substances inertes (15, 15') est acheminée vers un deuxième étage d'épuration des substances inertes (15, 15').

16. Procédé selon une des revendications précédentes 11 à 15, **caractérisé en ce que** l'eau usée concentrée par l'étage d'épuration des substances inertes (15, 15') est acheminée vers une unité d'épuration secondaire (7) au niveau de son arrivée d'eau (6), de son plan incliné (105) ou de son réservoir d'eau épurée (100) ou **en ce que** l'eau usée concentrée par l'étage d'épuration des substances inertes (15, 15') est acheminée vers l'écoulement (18).

17. Station de lavage de voitures comportant un dispositif selon une des revendications précédentes 1 à 10.
